# EUROPÄISCHE PATENTSCHRIFT

(11) **EP 1 997 715 B1**
(45) Veröffentlichungstag und Bekanntmachung des Hinweises auf die Patenterteilung: **18.09.2013**
(21) Anmeldenummer: 08153549.4
(22) Anmeldetag: 28.03.2008
(51) Int. Cl.: B62D 17/00, B60G 3/18, B60G 7/00, B62D 7/14, B62D 7/15, B62D 6/00

(54) **Aktives Fahrwerksystem eines zweispurigen Fahrzeugs sowie Betriebsverfahren hierfür**
Active suspension system of a double tracked vehicle and its operating procedure
Système de châssis actif d'un véhicule à deux voies et son procédé de fonctionnement

(30) Priorität: 26.05.2007 DE 102007024755
(43) Veröffentlichungstag der Anmeldung: 03.12.2008
(73) Patentinhaber: Bayerische Motoren Werke Aktiengesellschaft, 80809 München (DE)
(72) Erfinder: Eschenbach, Christopher, 82140 Olching (DE); Koenig, Andre, 80809 München (DE); Sonntag, Achim, 82140 Olching (DE); Repp, Sergey, 81927 München (DE); Gietl, Stefan, 80336 München (DE); Hertlen, Sebastian, 81677 München (DE); Forster, Josef, 85051 Ingolstadt (DE); Goubeau, Andreas, 82211 Herrsching-Breitbrunn (DE)

(56) Entgegenhaltungen:
- DE-A1- 4 020 547
- DE-A1- 10 045 956
- DE-A1- 19 902 556
- DE-A1- 19 956 775

## Beschreibung

Die Erfindung betrifft ein Betriebsverfahren für ein aktives Fahrwerksystem eines zweispurigen Fahrzeugs an dessen Hinterachse nach dem Oberbegriff des Anspruchs 1.

Zweispurige Fahrzeuge mit konventionellen Fahrwerken werden aus Stabilitätsgründen ausschließlich über die Vorderräder gelenkt. Die Radstellung der Hinterräder ist durch den Fahrer direkt nicht beeinflussbar. Die Radstellung der Hinterräder ergibt sich durch den Einfederzustand über die Radhubkinematik des Rades. Die Radhubkinematik beschreibt das Vorspurverhalten, d.h. welcher Spurwinkel sich am Rade einstellt, und das Sturzverhalten, d.h. welcher Sturzwinkel sich am Rade einstellt, über dem Einfederweg. Des Weiteren wird die Radstellung durch äußere Kräfte über die Elastokinematik beeinflusst. Diese beschreibt das Vorspurverhalten und Sturzverhalten des Rades unter der Einwirkung von äußeren Kräften, insbesondere unter Antriebs- und Bremskräften sowie unter Seitenkräften.

Eine derartige passive Hinterradaufhängung bewirkt, dass der Seitenkraftaufbau an der Hinterachse bei einer Lenkeingabe des Fahrers verzögert zum Seitenkraftaufbau an der Vorderachse erfolgt. Folge ist, dass ein herkömmliches Kraftfahrzeug beim Anlenken zunächst eine Gier- und Schwimmbewegung aufbaut, ehe die Seitenkräfte an der Hinterachse aufgebaut werden.

Der Querbeschleunigungsaufbau erfolgt als verzögerte Reaktion zur Lenkbewegung des Fahrers. Ein solches querdynamisches Systemverhalten ist prinzipiell schwingfähig und kann durch Lenkeingaben des Fahrers unter bestimmten Umständen destabilisiert werden.

In der Vergangenheit sind verschiedene Lösungen erarbeitet worden, um das querdynamische Fahrverhalten eines Kraftfahrzeuges zu verbessern. Bekannt sind Hinterradlenkungen, die die Hinterräder abhängig vom durch den Fahrer gestellten Lenkradwinkel verstellen. Grundsätzlich werden derartige Lenkungen als Allradlenksysteme bezeichnet, weil die besagten Hinterradlenksysteme grundsätzlich mit herkömmlichen Vorderachslenkungen kombiniert sind. Prinzipiell gibt es zwei Möglichkeiten, die Hinterräder im Verhältnis zu den Vorderrädern zu verstellen. Durch einen gegensinnigen Lenkeinschlag wird der Radstand des Fahrzeuges virtuell verkürzt, wodurch das Fahrzeug kurvenwilliger wird. Gleichzeitig nimmt die Stabilität des Fahrzeugs ab. Durch einen zu den Vorderrädern gleichsinnigen Lenkeingriff an der Hinterachse wird der Radstand des Fahrzeuges dagegen virtuell verlängert. Diese Maßnahme verbessert insbesondere die Stabilität bei instationären Fahrmanövern. Der gegensinnige Lenkeinschlag ist vornehmlich im Parkierbereich von Nutzen für den Fahrer, während ein gegensinniges Lenken an der Hinterachse bei höheren Geschwindigkeiten als unangenehm empfunden wird. Fahrdynamisch interessanter ist im Allgemeinen ein zu den Vorderrädern gleichsinniger Lenkeinschlag der Hinterräder im mittleren und höheren Fahrgeschwindigkeits-Bereich des Fahrzeugs, mit dem die Schwimm- und die Gierbewegung des Fahrzeugs reduziert werden kann/können. Durch einen schnelleren Seitenkraftaufbau an der Hinterachse wird dann nämlich die resultierende Querkraft im Fahrzeugschwerpunkt zu Beginn des Lenkmanövers erhöht und der Aufbau der Querbeschleunigung verläuft schneller. Die Gierbewegung verläuft dagegen langsamer, d.h. das Fahrzeug hat eine längere Ansprechzeit. Das Überschwingen der Gierreaktion verringert sich aufgrund einer erhöhten Gierdämpfung.

Theoretisch ist es durch eine derartige Ansteuerung möglich, den Schwimmwinkel sowohl stationär wie auch instationär vollständig zu kompensieren. In diesem Fall verlaufen die Fzg.-Querbewegüng und die Fzg.-Gierbewegung zeitgleich. Durch die Reduktion der Systemordnung ist das Fahrzeug in Bezug auf seine Querdynamik theoretisch nicht mehr schwingfähig. Eine vollständige Reduktion des Schwimmwinkels wird von Fahrer allerdings im Allgemeinen als unangenehm empfunden und konnte sich daher bislang nicht durchsetzen.

Bekannt sind Allradlenkungen, deren den Lenkwinkel oder Spurwinkel der Fzg,-Hinterräder bestimmendes hinteres Stellglied mechanisch an die Vorderradlenkung gekoppelt ist und über Spurstangen beide Räder der Hinterachse parallel verstellen kann. In den letzten Jahren sind vermehrt Allradlenkungen mit von der Vorderradlenkung entkoppelter hinterer Stelleinheit entwickelt worden, die somit unabhängig vom Vorderrad-Lenkwinkel einen (beliebigen) Lenkwinkel an den Hinterrädern einstellen können. Bekannt sind zudem Achsen, bei denen die Räder ein günstiges Sturzverhalten durch die Lenkbewegung annehmen. Diese üblichen Sturz-Änderungen sind aber betragsmäßig klein gegenüber den eingestellten Lenkwinkeln.

In diesem Zusammenhang wird auf die Allradlenkung nach EP 277 649 A1 verwiesen. Der Lenkwinkel der Hinterräder wird vornehmlich in Abhängigkeit der Parameter "Fahrerlenkwinkel" und "Fahrgeschwindigkeit" gesteuert. Bei Verwendung geeigneter Sensoren für die Querbeschleunigung und die Giergeschwindigkeit werden aber auch Regelfunktionen verwendet, die den Hinterradlenkwinkel in einer Übersteuersituation und in einer Untersteuersituation des Fahrzeugs geeignet stellen. Darüber hinaus ist in der WO2006/117343A1 eine radselektive Verstellung der Lenkwinkel der Hinterräder mittels aktiver, längenveränderlicher Lenker beschrieben. Bei dieser Betätigung findet keine Beeinflussung des Rad-Sturzwinkels statt.

Um das Stationärverhalten eines Fahrzeuges mit Allradlenkung nicht zu verschlechtern, kann eine Vorderradlenkung verwendet werden, welche die Lenkübersetzung aktiv verändern kann. Hierzu eignen sich Steer-by-wire Lenkungen oder Überlagerungslenkungen mit mechanischer Rückfallebene. Hierzu wird exemplarisch auf die Vernetzung von aktiver Vorderradlenkung und Hinterradlenkung nach der DE 10 2005 013 378 A1 verwiesen. In der DE 103 51 908 A1 hingegen ist ein Ansatz zur Vernetzung der Regelfunktionen von Vorderradlenkung und Hinterradlenkung und wahlweise auch mit den Regelfunktionen eines Bremsregelsystems beschrieben.

Für die vorliegende Erfindung ist der Sturzwinkel der Räder des Fahrzeugs zur Fahrbahn von Belang. Der Sturzwinkel zur Fahrbahn wird gebildet von der Radebene und der Fahrbahnnormalen. Der Sturzwinkel hat einen erheblichen Einfluss auf das Kraftschlusspotentials eines Reifens. Bei Kurvenfahrt des Fahrzeugs führt ein positiver Sturzwinkel zur Fahrbahn, gekennzeichnet durch eine zur Kurvenaußenseite gekippte Oberseite des Rades, zu einem Sturzverlust, d.h. die über den Rad-Reifen maximal übertragbare Kraft verringert sich. Im Gegensatz dazu kann ein Rad-Reifen größere Kräfte übertragen, wenn er unter negativem Sturzwinkel zur Fahrbahn läuft. Ein negativer Sturzwinkel ist dadurch gekennzeichnet, dass die obere Seite des Rades zur Kurveninnenseite gekippt ist. Das Sturzwinkeloptimum, d.h. derjenige Sturzwinkel, bei dem der Rad-Reifen die höchste Kraft übertragen kann, ist stark abhängig von Reifenbauart und Reifentyp.

In der Fahrwerksentwicklung ist man daher bestrebt, den Sturzwinkel bei Kurvenfahrt zumindest nahe dem Betrag "Null" zu halten und damit den Sturzverlust zu minimieren. Bei Kurvenfahrt entsteht an den Rädern eines Kraftfahrzeuges mit konventionellem Fahrwerk durch verschiedene Effekte ein positiver Sturzwinkel, der die übertragbaren Reifenkräfte in der beschriebenen Weise unvorteilhaft verringert.

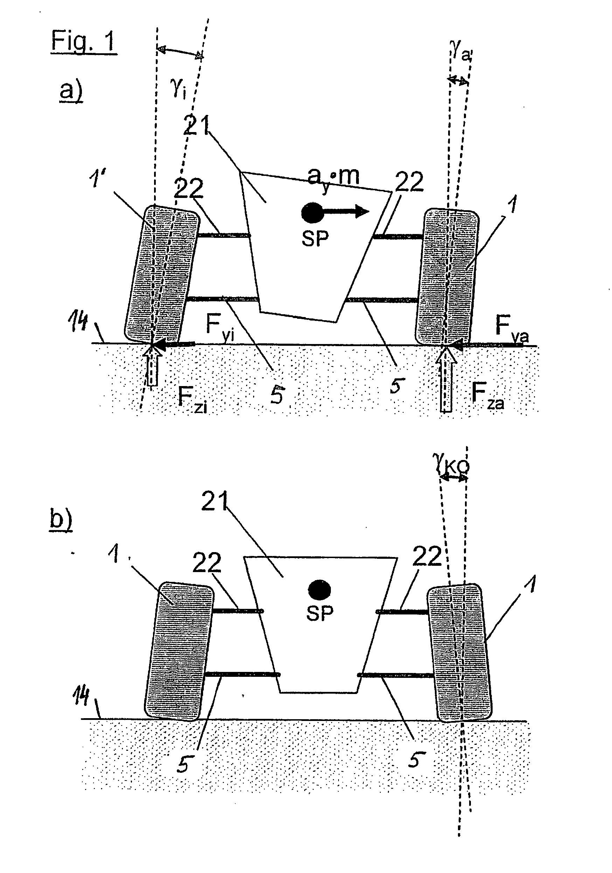

Dieser Zusammenhang kann anhand der beigefügten **Fig.1a** verdeutlicht werden, die im Folgenden kurz erläutert wird.
Mit der Bezugsziffer 1, 1' sind die beiden Räder einer Achse eines zweispurigen Fahrzeugs gekennzeichnet, die relativ zum Fahrzeug-Aufbau 21 unter anderem über obere Querlenker 22 und untere Querlenker 5 geführt sind. Zwischen den Rädern 1, 1' und der Fahrbahn 14 werden neben den Rad-Aufstandskräften F_{z} bei Kurvenfahrt- ohne dass hier Längskräfte übertragen oder berücksichtigt werden - jedenfalls Seitenkräfte F_{y} übertragen. Die weiteren Index-Buchstaben "a" bzw. "i" sind dem kurven-inneren ("i") Rad 1' bzw. dem kurven-aeußeren ("a") Rad 1 zugeordnet. Beim Durchfahren einer Kurve, hier einer Linkskurve, wirkt auf den Aufbau 21 die in dessen Schwerpunkt SP angreifende Zentrifugalkraft a_{y}•m (als mathematisches Produkt der Querbescheunigung a_{y} und der Masse m des Aufbaus 21) ein. Der jeweilige Rad-Sturzwinkel ist mit γ gekennzeichnet.

Wie ersichtlich nehmen bei dieser Kurvenfahrt sowohl das kurvenäußere Rad 1 als auch insbesondere das kurveninnere Rad 1' einen positiven Sturzwinkel an, jedenfalls dann, wenn der Sturzwinkel der Räder 1 bei Geradeausfahrt (bzw. in Konstruktionslage) 0 Grad beträgt. Den größten Anteil an diesem Sturzwinkel-Verlust (in Form eines entstehenden positiven Sturzwinkels) hat der Fahrzeugwankwinkel infolge der auf den Fahrzeugaufbau 21 im Schwerpunkt SP bei Kurvenfahrt wirkenden Querbeschleunigung a_{y}. Dieser Wankwinkel überträgt sich über die Einzelradaufhängungen des Fahrzeuges direkt auf die Räder (1) und kippt diese in unvorteilhafter Weise in einen positiven Sturzwinkel. Zwar wird diesem Effekt im Fahrwerk bekanntlich durch die Sturzprogression der Radaufhängung bei Einfederung entgegengewirkt. Diese Sturzprogression beschreibt das Sturzverhalten des Rades aufgetragen über dem Einfederweg und Ausfederweg des Rades. Federt das Rad ein, entsteht ein negativer Sturzwinkel relativ zum Fahrzeugaufbau, bzw. es verringert sich ein bereits vorhandener negativer Sturzwinkel weiter. Federt das Rad dagegen aus, entsteht im Allgemeinen ein positiver Sturzwinkel relativ zum Fahrzeugaufbau, bzw. es vergrößert sich ein vorhandener negativer Sturzwinkel in positive Richtung. Diese Charakteristik führt dazu, dass der durch den Wankwinkel des Fahrzeugaufbaus bewirkte Sturzverlust sowohl am ausfedernden kurveninneren Rad wie auch beim einfedernden kurvenäußeren Rad teilweise kompensiert wird. Das Ausmaß der erzielbaren Kompensation hängt jedoch stark vom Achsprinzip ab. Während Doppelquerlenkerachsen und Mehrlenkerachsen eine größere Sturzprogression ermöglichen, ist diese bei den heute an Kraftfahrzeug-Vorderachsen vorherrschenden McPherson-Federbeinen auf geringere Werte begrenzt. Insgesamt liegt der Kompensationsgrad des Sturzverlustes infolge des Wankwinkels des Fzg,.-Aufbaus bei heutigen Einzelradaufhängungen von Personenkraftwagen aber bei höchstens 20% bis 30%. Längslenkerachsen ermöglichen keine Kompensation des Sturzwinkelverlustes, während Starrachsen keinen Sturzverlust zur Fahrbahn aufweisen, ihre Kompensation beträgt damit 100%.
Zusätzlich zu den Sturzverlusten durch den Wankwinkel des Fahrzeugaufbaus entstehen weitere Sturzverluste an den Rädern durch Elastizitäten in den Gummilagern der Radaufhängung sowie durch die Elastizitäten der Lenker der Radführung. Zudem kann ein Sturzverlust durch die Verformung des Rades selbst, insbesondere der Felge, nicht vernachlässigt werden.

Um das Fahrverhalten des Fahrzeugs zu verbessern, ist man bestrebt, dem konstruktiven Sturzwinkel, also dem Winkel, den das Rad und die Fahrbahnnormale in Konstruktionslage einschließen, einen größeren negativen Betrag zu geben, so wie dies in **Fig.1b** (in Anlehnung an Fig.1a unter Verwendung gleicher Bezugsziffern für gleiche Elemente) dargestellt ist. Der konstruktive Sturzwinkel ist in dieser Darstellung mit γ_{KO} bezeichnet. Dies bewirkt, dass der Sturzwinkel des kurvenäußeren Rades der betreffenden Achse in günstiger Weise beeinflusst wird. Ein negativer konstruktiver Sturz, der immer symmetrisch zur Fahrzeugmittenebene ist, vergrößert aber den positiven Sturz zur Fahrbahn am kurveninneren Rad in ungünstiger Weise.

Das kurveninnere Rad ist zwar aufgrund der dynamischen Radlastverlagerung bei Kurvenfahrt entlastet und hat daher nur einen geringen Anteil am Seitenführungsvermögen; durch ungünstige Sturzwerte am kurveninneren Rad kann allerdings die Traktion eingeschränkt sein, wenn es sich bei der betrachteten Achse um eine angetriebene Achse handelt.
Ein negativer Sturzwinkel in Konstruktionslage hat weitere negative Auswirkungen. Durch die einseitige Belastung der Reifen-Lauffläche entsteht ein größerer Reifenverschleiß, was sich nachteilig auf die Reifenlebensdauer auswirkt. Gleiches gilt auch für einen stärkeren negativen Sturzwinkel und Sturzwinkel-Gradienten über der Beladung. Zudem wird ein größerer Reifeninnendruck erforderlich, der den Abrollkomfort an der betreffenden Achse vermindert. Bei einem konventionellen, auch als passiv zu bezeichnenden Fahrwerk besteht somit ein vielfältiger Zielkonflikt bei der Auslegung zwischen den Anforderungen bei Kurvenfahrt und bei Geradeausfahrt.

In den bisherigen Ausführungen wurde vornehmlich auf den Einfluss des Sturzwinkels auf die maximal übertragbare Querkraft eingegangen. Während der Einfluss des Sturzwinkels auf die übertragbaren Längskräfte von untergeordneter Bedeutung und darüber hinaus auch qualitativ stark reifenabhängig ist, kann durch eine Optimierung des Sturzwinkels das Kraftschlusspotential der Reifen auch bei überlagerter Kraftübertragung aus Längs- und Querkraft verbessert werden.

Um die erläuterten Zielkonflikte aufzulösen und das Reifenpotential besser zu nutzen, sind Sturzverstellungen bekannt, die den Radsturzwinkel aktiv einstellen können. Bekannt sind Lenkerverstellungen, die die Lage eines radführenden Lenkers oder dessen Länge aktiv verstellen. Beispielsweise zeigt die EP 536 191 eine Sturzverstellung in der oberen Lenkerebene, bei der eine Betätigungsstange über ein mechanisches Zwischenglied den oberen Anlenkpunkt des Radträgers und damit den Sturzwinkel des Rades verstellt. Als nachteilig ist hier der relativ hohe mechanische Aufwand zu nennen. In der DE 102 58 166 A1 ist ein Sturzverstellsystem für eine Doppelquerlenkerachse, die mit drei Stellgliedern pro Rad unter relativ großem technischen Aufwand den Spurwinkel und den Sturzwinkel beeinflussen kann, beschrieben. In der DE 10 2004 034 118 A1 ist eine Radaufhängung mit einer Sturzverstelleinrichtung unabhängig vom Federweg des Rades beschrieben. Dieser Verstellmechanismus ist wahlweise nur an der Hinterachse oder an Vorderachse und Hinterachse eines Fahrzeugs anzuwenden, wobei die Verstellung über aktive Lenker oder mittels sog. Lenker-Fußpunktverstellung (= translatorische Verlagerung eines Lenkers in seiner Gesamtheit) oder mittels eines geteilten Radträgers erfolgen kann. Von einer Spurwinkel-Verstellung wird in dieser Schrift nicht gesprochen.

Ein relativ aufwändiger Ansatz ist in der DE 695 20 682 T2 beschrieben. Darin ist ein Fahrzeugaufhängungssystem für ein lenkbares Rad mit Sturzverstellung, Vorspurverstellung und Nachlaufverstellung jeweils über Hydraulikzylinder gezeigt, wobei jeder dieser Parameter separat mit eigener Betätigungseinrichtung verstellt wird.

Des Weiteren sind Sturzverstell-Systeme in Form sog. Radträgerverstellungen bekannt. Bei diesen Systemen wird der Sturzwinkel über das Verschwenken zweier Radträgerhälften verstellt. So ist in der WO 2004/041621 A1 ein System beschrieben, welches über Sonderreifen mit zwei unterschiedlichen Gummimischungen und Reifenprofilen verfügt. Durch die großen Sturzwinkefverstellbereiche hat dieses System einen großen Platzbedarf und stellt eine wenig serientaugliche Lösung dar. Weiterhin ist es bekannt, aktive Sturzverstellsysteme mit separaten Hinterradlenkungen zu kombinieren. In der DE 38 13 438 C2 ist eine Sturzverstellung an einer Fzg.-Hinterachse beschrieben, die den Sturzwinkel über die Verstellung der oberen Federbeinlager verstellt. Dieses Sturzverstellsystem ist gekoppelt mit einer separaten Hinterradlenkung, die beide Räder der Hinterachse mechanisch gekoppelt lenkt.

In der DE 40 20 547 A1, die zur Bildung des Oberbegriffs des vorliegenden Anspruchs 1 herangezogen wurde, eine Vorrichtung zur aktiven Verstellung eines Kraftfahrzeugrades über eine ein Stellglied umfassende Einrichtung, bei der die Radführungsglieder unabhängig von der Einrichtung unter und/oder oberhalb der Raddrehachse an einem Radträger angelenkt und am Fahrzeugaufbau schwenkbar gehalten sind, bekannt, wobei die Einrichtung ein mit dem Radträger unter Zwischenschaltung einer Spurstange verbundenes Stellglied umfasst und das Stellglied zu zwangsweisen Radstellungsänderungen in Abhängigkeit von Fahrparametern um eine unterhalb der Raddrehachse durch ein radträgerseitiges Spurstangengelenk und ein radträgerseitiges Lenkergelenk gebildete Schwenkachse verstellbar ist.

Hiermit soll nun ein Betriebsverfahren für ein aktives Fahrwerksystem eines zweispurigen Fahrzeugs nach dem Oberbegriff des Anspruchs 1 aufgezeigt werden, welches sich durch hohe Funktionalität auszeichnet, d.h. unter vertretbarem Aufwand zu einem günstigen Fahrverhalten führt (= Aufgabe der vorliegenden Erfindung).

Die Lösung dieser Aufgabe ist dadurch gekennzeichnet, dass bei Kurvenfahrt des Fahrzeugs der Aktuator zur Verlagerung des radseitigen Spurlenker-Anlenkpunktes derart angesteuert wird, dass bei gleichzeitiger Ansteuerung des anderen, den Spurwinkel und Sturzwinkel mittels des aktiven Querlenkers verstellenden Aktuators am zugehörigen Rad der Spurwinkel im wesentlichen unverändert bleibt, und dass bei Kurvenfahrt des Fahrzeugs nur am kurvenäußeren Hinter-Rad der Sturzwinkel verstellt wird, während am kurveninneren Hinter-Rad ausschließlich eine Spurverstellung vorgenommen wird, derart, dass die beiden Räder der Hinterachse zumindest annähernd parallel eingeschlagen sind. Vorteilhafte Weiterbildungen sind Inhalt der Unteransprüche.

Vorliegend wird somit eine Verbesserung für eine aktive Ansteuerung der Radführung der Hinterachse eines zweispurigen Kraftfahrzeugs zur Verbesserung des Fahrverhaltens des Fahrzeugs aufgezeigt, wobei die Vorzüge von Hinterradlenkung und aktiver Sturzverstellung in einem (einzigen) System miteinander verbunden sind. Offenbart ist ein aktives Fahrwerkssystem zur radindividuellen, aktiven Ansteuerung von Spurwinkel (Vorspur) und Sturzwinkel an den Rädern insbesondere einer Hinterachse in Verbindung mit einer elektronischen Regeleinheit zur Erzeugung von Stellsignalen für einen den Sturzwinkel und den Spurwinkel in Abhängigkeit von den Fahrzustand des Fahrzeugs repräsentierenden Eingangsgrößen verstellenden ersten Aktuator, wobei mit diesem ersten Aktuator eine gemeinsame Verstellung von Sturzwinkel und Vorspurwinkel über eine einzige Verstelleinrichtung (= Aktuator) je Rad oder sogar über eine einzige gemeinsame Verstelleinheit (= Aktuator) für beide Räder der Achse in einer fahrdynamisch sinnvollen Ausprägung vorgeschlagen ist. Damit kann der Aufwand zur Ansteuerung des Aktuators oder der Aktuatoren gering gehalten werden, wenn die gemeinsame Verstellung von Spurwinkel und Sturzwinkel jeweils in einem nennenswerten Umfang in fahrdynamisch sinnvoller Weise erfolgt. Letzteres ist dann gegeben, wenn - wie in Anspruch 1 angegeben ist - mit einer Verlagerung des radseitigen Anlenkpunktes des aktiven Querlenkers in Richtung zunehmenden positiven Sturz das Rad zunehmend in Nachspur geht, während mit zunehmenden negativen Sturz das Rad zunehmend in Vorspur geht.

Dabei sei ausdrücklich darauf hingewiesen, dass die beiden kinematisch aneinander gekoppelten Änderungen von Spurwinkel und Sturzwinkel jeweils signifikant bzw. nennenswert sein sollen. Dies findet darin seinen Ausdruck, dass - wie in Anspruch 1 angegeben ist - sich der Sturzwinkel um einen Betrag zumindest in der Größenordnung der an eine Sturzwinkel-Veränderung kinematisch gekoppelten Spurwinkel-Veränderung verändert, während sich der Spurwinkel um einen Betrag zumindest in der Größenordnung der hälftigen Sturzwinkel-Veränderung verändert. In anderen Worten ausgedrückt bedeutet dies, dass wenn sich aufgrund einer Verlagerung des randseitigen Anlenkpunktes des sog. aktiven Querlenkers der Sturzwinkel des Rades beispielsweise um 4° ändert, sich gleichzeitig der Spurwinkel des Rades um beispielsweise 2° oder um 3° oder um 4° ändert. Selbstverständlich liegt dann, nämlich mit einer Sturzwinkel-Änderung um 4°, auch eine Spurwinkel-Veränderung um bspw. 1,8° oder 4,2° im erfindungsgemäßen Bereich.

Mit den angegebenen Zusammenhängen, was die Veränderung des Spurwinkels in Abhängigkeit von einer Veränderung des Sturzwinkels betrifft, unterscheidet sich das hier vorgestellte Konzept vom üblichen Stand der Technik, bei welchem entweder eine Sturzwinkel-Änderung oder eine Spurwinkel-Änderung realisiert ist, wobei - abhängig von der individuellen Auslegung - zwar ebenfalls der jeweils andere Winkel eine Änderung erfahren kann, jedoch nur in sehr geringem Maße. Es unterscheidet sich das hier vorgeschlagene Konzept aber auch vom Stand der Technik nach der DE 40 20 547 A1, welche zwar eine gemeinsame Verstellung von Spur und Sturz ermöglicht, jedoch eine Verstellung von Spur oder Sturz alleine bevorzugt.

Neben dem ersten Aktuator zur gemeinsamen Verstellung von Spur und Sturz ist noch ein zweiter Aktuator zur Spurwinkel-Verstellung vorgeschlagen, worauf an späterer Stelle noch eingegangen wird. Zunächst sei jedoch ausdrücklich darauf hingewiesen, dass hier eine aktive Verstellung gleichzeitig des Rad-Sturzwinkels und des Rad-Spurwinkels mittels des ersten Aktuators jeweils in nennenswertem Umfang vorgeschlagen wird. Keinerlei Bezug (oder Gemeinsamkeit) besteht somit zu oder mit einer Anordnung zum einmaligen Einstellen von Rad-Spur und Rad-Sturz. Dies ist vorliegend in Anspruch 1 dadurch zum Ausdruck gebracht, dass der Aktuator geeignet ist, die möglichen Stelleingriffe zur gleichzeitigen Verstellung von Rad-Spur und Rad-Sturz in einem fahrdynamisch relevanten Frequenzbereich in der Größenordnung von 1 Hertz oder höher auszuführen. Dies besagt, dass der Aktuator in der Lage ist, ausgehend von seiner Mittelstellung in 1 Sekunde zumindest einmal in seine Endanschlag-Position zu gelangen. Damit kann im Fahrbetrieb bereits gut auf fahrdynamische Einflüsse reagiert werden. Bevorzugt kommt jedoch ein Aktuator zum Einsatz, der die Verstellung von Spurwinkel und Sturzwinkel in einem fahrdynamisch relevanten Frequenzbereich von bis zu 5 Hertz zu stellen in der Lage ist, d.h. dass ein solcher Aktuator in der Lage ist, den halben möglichen Verstellweg in 200 Miilisekunden zu verfahren.

In dem soweit erläuterten Sinne, nämlich dass aktiv eine fahrdynamisch sinnvolle sowie für den Sturzwinkel und den Spurwinkel gemeinsame und dabei jeweils nennenswerte Änderung mit einem ersten Aktuator (zumindest je Rad der Achse) erfolgen kann, soll nun der eine gekoppelte Sturz- und Spurverstellung hervorrufende Lenker, der hier aktiver Querlenker genannt wird, sowie die radführenden Lenker des Fahrwerks angeordnet sein. Umgesetzt sein kann dies an Mehrlenkerachsen, die eine Verstellung der radführenden Lenker insbesondere in der oberen Lenkerebene zulassen, dergestalt, dass die aktive Änderung der Lenkerstellungen zu einer Verkippung des Radträgers und damit des Rades um eine Schwenkachse vorzugsweise im Bereich der unteren Lenkerebene führt. Darüber hinaus soll eine derartige Fahrzeug-Hinterachse eine Eignung zur Lenkbarkeit aufweisen, indem der Radlenkwinkel bzw. Spurwinkel jedes Hinterrades mittels einer Verlagerung oder Längenveränderung eines sog. Spurlenkers durch einen zweiten Aktuator verändert werden kann.

Vorzugsweise ist das vorgeschlagene System an einer Hinterachse an einem Fahrzeug mit einer Vorderachse gekoppelt, die ein hohes Maß an Sturzprogression ermöglicht, sodass die Vorderachse auf ein hohes Querführungspotential abgestimmt sein kann. Die weiteren Ausführungen gelten insbesondere für eine angetriebene Hinterachse, z.B. in Fahrzeugen mit Standardantrieb oder mit Heckmotor. Hier kann eine Sturzoptimierung das Seitenführungspotential bei überlagerter Querkraft und Antriebskraft effektiv steigern. Alternativ ist das hier erläuterte aktive Fahrwerksystem jedoch praktisch ebenso für eine nicht angetriebene Hinterachse eines Fahrzeugs einsetzbar.

Es wird vorgeschlagen, die radführenden Lenker in ihrer Gesamtheit (und somit auch den sog. aktiven Querlenker) solchermaßen anzuordnen, dass die Drehachse oder Schwenkachse der Sturzverstellung, um die der Radträger verschwenkt wird, in Seitenansicht der Achse bzw. des Fahrzeugs im Bereich der Radmitte unterhalb derselben, jedoch oberhalb der Fahrbahn von der Fahrbahn beabstandet liegt. Dies hält den Bauraumbedarf des nach innen in negativen Sturz schwenkenden Rades im Gegensatz zu Systemen, die über hohen technischen Aufwand einen Sturz-Schwenkpunkt im Bereich der Fahrbahnoberfläche realisieren, gering. Ferner wird am Rad im Rahmen einer Sturz-Verstellung um eine oberhalb der Fahrbahn liegende Drehachse bzw. Schwenkachse eine seitliche Bewegung des Radaufstandspunktes eingeleitet, die bei rollendem Rad zu einem Schräglaufwinkel für den Zeitraum der Verstellung führt. Dieser kurzzeitige Schräglauf des Rades ruft in vorteilhafter Weise eine Reifen-Seitenkraft hervor, die den Seitenkraftaufbau des Rades bei Verstellung in negativen Sturz unterstützt.

Um den Spurwinkel und den Sturzwinkel in der angegebenen, fahrdynamisch sinnvollen Kopplung zu verstellen, sodass ein negativer Spurwinkel zusammen mit positivem Sturzwinkel bzw. ein positiver Spurwinkel zusammen mit negativem Sturzwinkel auftreten, liegt in günstiger Weise ein im wesentlichen nur den Spurwinkel des Rades bestimmender Spurlenker in Fahrtrichtung betrachtet hinter Radmitte (bzw. in Draufsicht auf die Achse hinter der Achsmitte). Dass der besagte Spurlenker im wesentlichen nur den Spurwinkel des Rades bestimmt, ist bspw. dann gegeben, wenn sich bei einer Spurverstellung um 6° (6 Winkelgrade) der Sturzwinkel des Rades nur um bspw. 30' (30 Winkelminuten) verändert.

Vorzugsweise wird bezüglich einer Sturzverstellung eine Drehachse oder Schwenkachse des Rades bzw. genauer dessen Radträgers gebildet, die nach hinten (d.h. entgegen der Fahrtrichtung) ansteigt. Um über den aktiven Querlenker sowohl den Sturz-Winkel als auch den Spur-Winkel betragsmäßig in mindestens dem gleichem Maße zu verstellen, oder den Sturzwinkel betragsmäßig in größerem Ausmaß gegenüber dem Spurwinkel zu verändern, ist es dabei erforderlich, dass diese besagte Drehachse (Schwenkachse) in Seitenansicht mit einem Winkel von ca. 45° oder weniger zu einer fahrbahnparallelen Geraden verläuft.

Erfindungsgemäß ist zusätzlich zur geschilderten Verstellmöglichkeit des sog. aktiven Querlenkers, der mit einer Sturzverstellung des Rades gleichzeitig den Spurwinkel des Rades nennenswert verändert, eine weitere Verstelleinrichtung vorgesehen sein, die die Anzahl der Freiheitsgrade bei der aktiven Ansteuerung der Radstellung erhöht. Demnach ist (zumindest) ein weiterer (zweiter) Aktuator zur Verlagerung des radseitigen Anlenkpunktes des bereits genannten Spurlenkers, der im wesentlichen den Rad-Spurwinkel bestimmt, vorgesehen. Damit ist zusätzlich zur gemeinsamen Spurwinkel-Verstellung in Verbindung mit einer Sturzwinkel-Verstellung eine weitere Möglichkeit zur Einstellung des Spurwinkels gegeben. Bei Kurvenfahrt des Fahrzeugs soll der weitere/zweite Aktuator zur Verlagerung des radseitigen Spurlenker-Anlenkpunktes derart angesteuert werden, dass bei gleichzeitiger Ansteuerung des anderen (ersten) den Spurwinkel gemeinsam mit dem Sturzwinkel verstellenden Aktuators am zugehörigen Rad der Spurwinkel im wesentlichen unverändert bleibt. Damit möglich, bei Kurvenfahrt des Fahrzeugs nur am kurvenäußeren Hinter-Rad des Fahrzeugs den Sturzwinkel zu verstellen, während am kurveninneren Hinter-Rad ausschließlich eine Spurverstellung vorgenommen wird, derart, dass die beiden Räder der Hinterachse zumindest annähernd parallel eingeschlagen sind.

In einer Ausprägung der vorliegenden Erfindung kann die beschriebene aktive Einstellung von Spurwinkel und Sturzwinkel der Hinterräder des Fahrzeugs mit einem sog. aktiven Lenksystem an der Vorderachse des Fahrzeugs kombiniert sein, welches bspw. als elektromechanische Überlagerungslenkung ausgebildet ist und mit Hilfe dessen/derer ein von der Vorgabe des Fahrers unabhängiger Lenkwinkel an den lenkbaren Vorderrädern einstellbar ist. Hierdurch ist es möglich, die stationären Lenkeigenschaften des Fahrzeuges für den Fahrer bei Eingriffen in die Radstellung der Hinterräder konstant zu halten. In der DE102005013378A1 ist beschrieben, wie ein aktiv gestellter Lenkwinkel der Fahrzeug-Hinterräder an der Vorderachse des Fahrzeugs von einer aktiven Stelleinheit zum vom Fahrer gestellten Lenkwinkel hinzuaddiert werden kann. Aufgrund dieses Zusatzwinkels kann der Lenkbedarf des Fahrers in Abhängigkeit von der Querbeschleunigung konstant gehalten werden. Vorliegend kann somit eine Überlagerungslenkung an der Vorderachse, die den Summenlenkwinkel der Vorderachse in Abhängigkeit von den an der Hinterachse gestellten Sturzwinkeln und Spurwinkeln der Hinterräder modifiziert, so betrieben werden, dass der Lenkwinkelbedarf für den Fahrer konstant gehalten oder zumindest reduziert wird. Allgemein kann ein aktives Lenksystem an der Fzg.-Vorderachse bei der Ermittlung eines zu stellenden Lenkwinkels die gestellten Positionen an den sog. aktiven Lenkern der Hinterachse, deren radseitiger Anlenkpunkt verlagerbar ist, berücksichtigen.

Was die Aktuatoren betrifft, mit Hilfe derer der radseitige Anlenkpunkt eines aktiven radführenden Lenkers, nämlich des sog. aktiven Querlenkers und/oder eines aktiven Spurlenkers verlagerbar ist, so können diese elektromechanisch oder hydraulisch ausgeführt sein. Vorzugsweise sind sie jedoch mit einem Sperrensystem ausgestattet, welches passiv oder aktiv ausgeführt ist, um den jeweiligen Aktuator in einer definierten Lage zu halten sowie von äußeren Kräften zu entlasten. Ein solches Sperrensystem bzw. eine solche Sperreinrichtung soll insbesondere eine unbeabsichtigte Verstellung der Aktuatoren verhindern. In einer Ausprägung des erfindungsgemäßen Fahrwerks können diese Sperren als aktive Sperren ausgeführt sein. Diese werden von einem Steuersignal aktiv angesteuert und verriegeln über eine mechanische Verriegelungseinheit den Aktuator in seiner aktuellen Position. Als Verriegelungselemente kommen dabei Sperrklinken oder Stiftblockierungen zur Anwendung. Ein derartiges aktives Sperrensystem kann den Aktuator im Fehlerfall blockieren und fehlerhafte Stelleingriffe unterbinden, jedoch kann ein solches aktives Sperrensystem aufgrund der Verzögerungszeiten durch Signalfluss und das Öffnen und Schließen der mechanische Verriegelungselemente nicht eingesetzt werden, um permanent wirkende Vorlasten auf den Aktuator zu sperren und den Aktuator dadurch von permanent erforderlichen Haltekräften zu entlasten. In einer weiteren Ausführung des erfindungsgemäßen Fahrwerks werden daher passive Sperren vorgeschlagen, die den Aktuator in einer definierten Lage gegen die Einwirkung äußerer Vorlasten und Störkräfte halten. Erst bei Energiezufuhr des Aktuators zur aktiven Verstellung lösen sich diese passiven Sperr-Elemente und erlauben eine Bewegung des Aktuators. Auf diesem Wege wird der Aktuator von Vorlasten entlastet, was den Energieaufwand des Systems erheblich reduziert. Durch die deutlich schnelleren Reaktionszeiten der passiven Sperren ist eine Verwendung des Aktuators im fahrdynamisch relevanten Frequenzbereich bis in etwa 5 Hertz möglich.

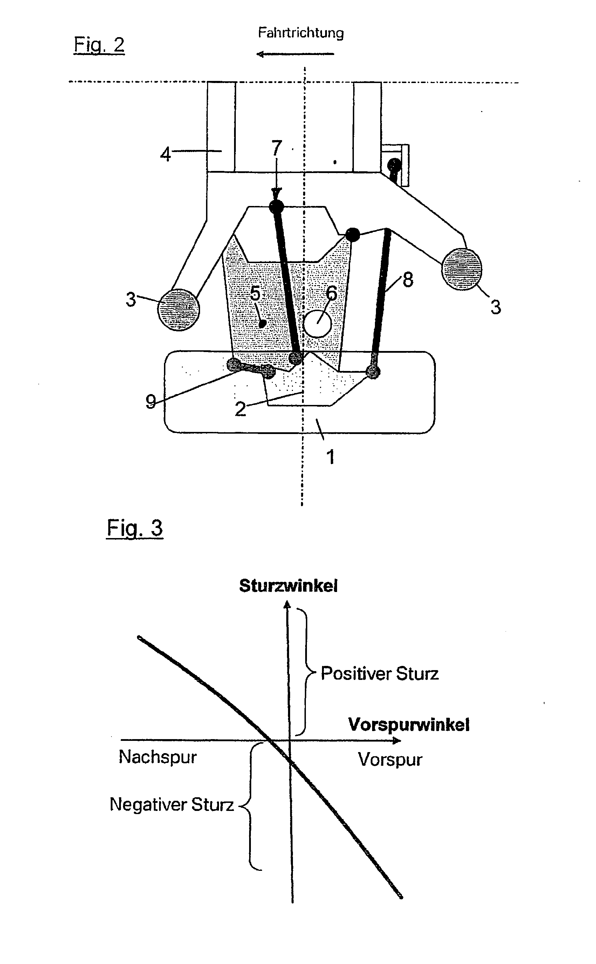

Im weiteren wird die Erfindung anhand von Ausführungsbeispielen erläutert, die in den beigefügten **Figuren 3 - 19** dargestellt sind.

Auf die beiden ebenfalls beigefügten **Figuren 1a, 1b****,** die zur Erläuterung des Sturzwinkels allgemein eine Prinzipdarstellung eines zweispurigen Fahrzeugs, insbesondere von dessen Hinterachse, in einer Ansicht von hinten zeigen, wurde bereits weiter oben ausführlich eingegangen.

Auch die beigefügte Figur 2 zeigt allgemeinen Stand der Technik, nämlich die Prinzipdarstellung einer passiven, das technische Umfeld der vorliegenden Erfindung bildenden Hinterachse eines zweispurigen Fahrzeugs in Halbachsdarstellung in der Draufsicht, anhand derer die Bauelemente eines erfindungsgemäßen Fahrwerkssystem erläutert werden.

Figur 3 zeigt ein Diagramm des Rad-Sturzwinkels über dem Rad-Spurwinkel für ein aktives Fahrwerksystem mit Verstellung durch einen aktiven Querlenker sowie durch die Achskinematik festgelegter mechanischer Kopplung zwischen Spurwinkel und Sturzwinkel.

Die konkrete Darstellung aktiver Fahrwerksysteme zur Durchführung des erfindungsgemäßen Betriebsverfahrens findet sich in den PrinzipDarstellungen der folgenden **Figuren 4 - 14****.**

Im Einzelnen zeigt
- **Fig. 4**: die Prinzipdarstellung einer erfindungsgemäßen Fzg.- Hinterachse (analog der Darstellung in Fig.2) in Halbachs-Darstellung in Draufsicht mit einem längenveränderlichen aktiven Querlenker sowie zusätzlich einem aktiven, längenveränderlichen Spurlenker,
- **Fig. 5**: eine Darstellung ähnlich Fig.4, jedoch mit einem in seiner Gesamtheit verlagerbaren aktiven Querlenker, dessen sog. Fußpunkt somit verstellbar ist, sowie mit einer Fußpunkt-Verstellung am aktiven Spurlenker,
- **Fig. 6**: die Prinzipdarstellung einer Hinterachse in Draufsicht mit einer für beide Räder gekoppelten aktiven Querlenker-Fußpunktverstellung mittels eines sog. Zentral-Aktuators sowie mit einer aktiven Spurlenker-Fußpunktverstellung mittels eines weiteren Zentral-Aktuators
- **Fig. 7**: eine Darstellung ähnlich Fig.6, jedoch mit längenveränderlichen aktiven Spurlenkern
- **Fig. 8**: eine Darstellung ähnlich Fig.7, jedoch mit einer Fußpunktverstellung der aktiven Spurlenker
- **Fig. 9**: die Darstellung der Drehachse/Schwenkachse der aktiven Sturzverstellung in einer Ansicht von hinten auf das rechte Fzg.-Hinterrad und rechts daneben die Entstehung eines Schräglaufwinkels bei aktiver Sturzverstellung in folge der seitlichen Verschiebung des Radaufstandspunktes in Draufsicht
- **Fig. 10**: die Darstellung eines Fahrzeugs in Draufsicht mit erfindungsgemäßem Fahrwerksystem zusammen mit Aktuatoren, elektronischer Steuereinheit, Sensoren und wesentlichen Signalpfaden
- **Fig. 11**: ein Diagramm des Rad-Sturzwinkels über dem Rad-Spurwinkel für ein erfindungsgemäßes Fahrwerksystem mit aktiver Querlenker-Verstellung und aktiver Spurlenker-Verstellung für verschiedene Betrisbsstrategien
- **Fig. 12a,b**: in einer Darstellung analog Fig.1a ein Fahrzeug mit erfindungsgemäßem Fahrwerksystem mit asymmetrischer Sturzverstellung von kurveninnerem und kurvenäußerem Rad
- **Fig. 13**: die Ansicht von hinten auf die linke Hälfte einer Fahrzeug-Hinterachse, an der ein erfindungsgemäßes aktives Fahrwerksystem analog einer der vorangegangenen Figuren verbaut sein kann
- **Fig. 14**: die Seitenansicht einer Fahrzeug-Hinterachse, an der ein erfindungsgemäßes aktives Fahrwerksystem analog einer der vorangegangenen Figuren verbaut sein kann

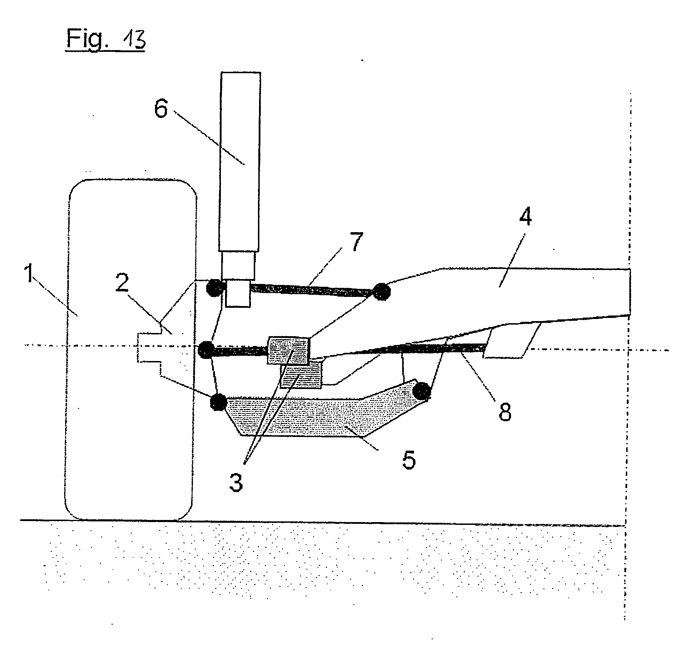

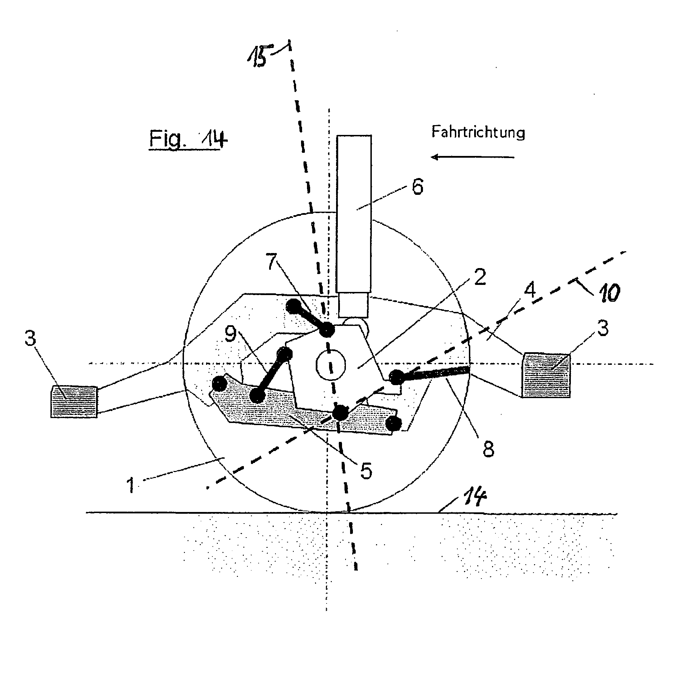

**Fig. 2** zeigt zur Erläuterung des technischen Umfelds einer möglichen Ausführungsform des erfindungsgemäßen Fahrwerksystems eine Mehrlenker-Hinterachse eines Personenkraftwagens in Halbachs-Darstellung und Draufsicht. An einer Achse dieser Bauart, die in weiteren Ansichten in den **Figuren 13****,** **14** dargestellt ist, kann ein erfindungsgemäßes aktives Fahrwerksystem realisiert sein. In bzw. an anderen Achskonstruktionen lässt sich ein erfindungsgemäßes aktives Fahrwerkssystem jedoch ebenfalls darstellen.

Das Rad 1 des Fahrzeugs ist dabei an einem Radträger 2 gelagert. Dieser Radträger 2 ist über an diesem angelenkte Lenker 5, 7 und 8 an einem Hinterachsträger 4 angebunden. Der Hinterachsträger 4 ist über (insgesamt) vier Hinterachsträgerlager 3 (insbesondere aus Elastomeren) am Unterboden des hier nicht gezeigten Fzg.-Aufbaus (vgl., Fig.1a, 1b, Bezugsziffer 21) elastisch gelagert. Der Lenker 5 stellt eine sog. Schwinge (hierfür wird ebenfalls die Bezugsziffer 5 verwendet) dar und bildet die untere Lenkerebene. Ein Querlenker 7 ist im wesentlichen oberhalb des Radträgers 2 angeordnet. Ein sog. Spurlenker 8 ist am hinteren Ende des Radträgers 2 angelenkt und verläuft annähernd waagerecht mit gleichem Abstand zur Schwinge 5 und zum Querlenker 7 in Fahrtrichtung betrachtet hinter Radmitte. (Die Fahrtrichtung des Fahrzeugs ist in den Figuren 2, 4 - 13 und 19 durch einen Pfeil angegeben).

Die Abstützung eines auf das Rad 1 einwirkenden Bremsmomentes übernimmt ein sog. Integrallenker 9, der zwischen dem Radträger 2 und der Schwinge 5 abgestützt ist, um die Lager der Schwinge 5 zu entlasten. Zusätzlich dargestellt ist ein zwischen Radträger 2 und nicht dargestelltem Fzg.-Aufbau im wesentlichen vertikal eingespannter Dämpfer 6, der hier am oberen Ende des Radträgers 2 angelenkt ist. Dieser Dämpfer 6 kann gleichzeitig eine nicht dargestellte Tragfeder für den Fzg.-Aufbau gegenüber dem Rad 1 enthalten und somit ein sog. Feder-Dämpferbein bilden. Auf die Darstellung einer Abtriebswelle zum Antrieb des Rades 1 - es handelt sich hier um eine angetriebene Hinterachse eines Personenkraftwagens - ist aus Gründen der Übersichtlichkeit verzichtet.

Über eine Verlagerung des radseitigen Anlenkpunktes des Querlenkers 7 (am Radträger 2), der dann als aktiver Querlenker 7 bezeichnet wird, ist es möglich, den Spurwinkel und den Sturzwinkel des Rades 1 in einer fahrdynamisch sinnvollen Kopplung zu verstellen. Eine derartige Kopplung der besagten Parameter Spurwinkel, auch Vorspurwinkel bzw. Vorspur genannt, sowie Sturzwinkel, auch nur Sturz genannt, ist in Fig.3 dargestellt. Dabei geht das Rad 1 bei einer Verstellung in negativen Sturz gleichzeitig in zunehmende positive Vorspur. Bei Verstellung in positiven Sturz hingegen nimmt das Rad 1 eine Stellung gemäß Nachspur an. Dabei können - wie hier gezeigt - die Verstellbereiche von Sturzwinkel und Vorspur-Winkel in der gleichen Größenordnung liegen, d.h. dass es hier im Unterschied zu bekannten Hinterradlenkungen eine deutlichere Änderung des Sturzwinkels (mit einer Spurwinkel-Änderung) gibt, sodass das hier vorgeschlagene System (auch) als aktive Sturzverstellung bezeichnet werden kann. Dabei kann die Verstellung von Spurwinkel/Vorspurwinkel und Sturzwinkel in einem fahrdynamisch relevanten Frequenzbereich von bis zu 5 Hertz erfolgen, so dass das erfindungsgemäße Fahrwerksystem in der Lage ist, Spur/Vorspur **u**nd Sturz gemeinsam aktiv in hochdynamischen Fahrmanövern anzupassen.

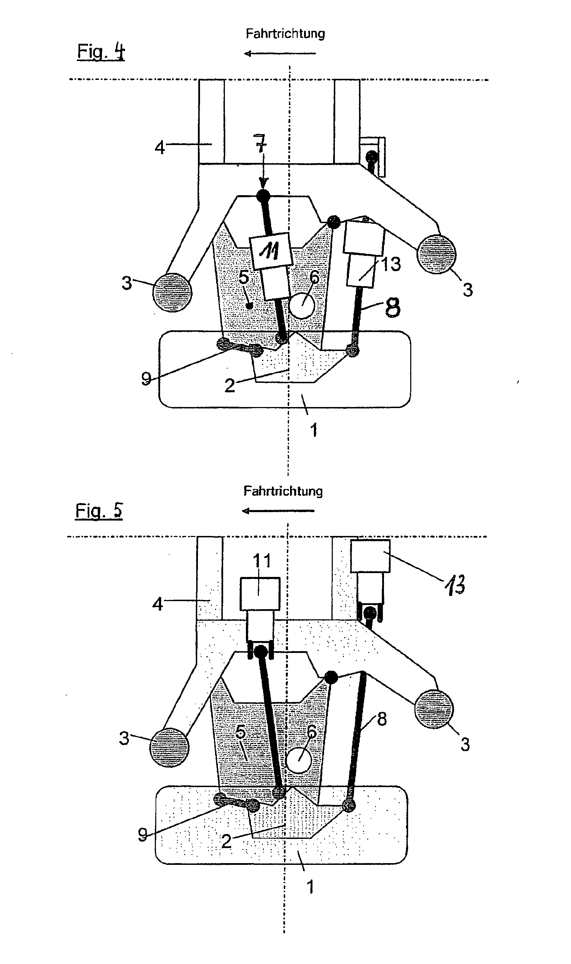

Die Verstellung von Spur und Sturz mittels des aktiven Querlenkers 7 kann dabei der Gestalt vorgenommen werden, dass quasi die Länge des aktiven Querlenkers 7 verändert wird. Eine derartige Ausführung zeigt **Fig.4****.** Demnach ist der aktive Querlenker 7 geteilt ausgebildet und es ist zwischen dessen Hälften ein Aktuator 11 angeordnet, mit Hilfe dessen der radseitige Anlenkpunkt des mit seinem anderen Ende am Hinterachsträger **4** angelenkten aktiven Querlenkers 7 verlagert werden kann. Wird dabei der aktive Querlenker 7 verkürzt, so nimmt das Rad 1 einen negativen Sturzwinkel und einen positiven Vorspurwinkel an. Eine Verlängerung des aktiven Querlenkers 7 hingegen bewirkt eine Verstellung in positiven Sturz mit einer gleichzeitig aufgeprägten Verstellung in negativen Vorspurwinkel, welcher im Allgemeinen auch als Nachspurwinkel bezeichnet wird. Vorteil dieser Ausgestaltung ist, dass sich durch die Verwendung eines solchen aktiven Querlenkers 7 je Rad 1 der Achse eine günstige Adaptierbarkeit an bestehende Achssysteme ergibt.

In einer alternativen Ausführung eines erfindungsgemäßen Fahrwerks wird der aufbauseitige Anlenkpunkt des aktiven Querlenkers 7 und somit der aktiver Querlenker 7 in seiner Gesamtheit verlagert, um gleichzeitig den Sturzwinkel und den Spurwinkel am Rad 1 zu verstellen. Diese in **Fig. 5** dargestellte Ausführungsform kann auch als Lenkerfußpunktverstellung bezeichnet werden. Bei dieser Ausführungsform des erfindungsgemäßen Fahrwerksystems ist der Aktuator 11 zur Verlagerung des Querlenkers 7 vorzugsweise in den Hinterachsträger 4 integriert, wobei es möglich ist, den Aktuator 11 zum Zweck des Austausches oder der Reparatur demontierbar zu gestalten. In diesem Fall kann ein in seiner Bauart konventioneller Querlenker 7 zum Einsatz kommen. Wird der aufbauseitige Anlenkpunkt des aktiven Querlenkers 7 mithilfe des Aktuators 11 zur Fahrzeugmitte hin verlagert, so nimmt das betroffene Rad 1 einen negativen Sturzwinkel und einen positiven Vorspurwinkel an. Eine Verlagerung des aufbauseitigen Anlenkpunktes des aktiven Querlenkers 7 zur Fahrzeugaußenseite hin bewirkt dagegen eine Rad-Verstellung in positiven Sturz mit einer gleichzeitig aufgeprägten Verstellung in negativen Vorspurwinkel, d.h. in Nachspur.

Zurückkommend auf **Fig. 4** verfügt die Achse über zwei weitere Aktuatoren 13, die ein weiteres Lenkerpaar, nämlich die genannten Spurlenker 8 und damit vornehmlich den Parameter "Spurwinkel" der beiden Räder 1 der Achse beeinflussen können. Jeder radindividuelle Spurlenker 8 ist in der Achse dabei so angeordnet, dass eine Verkürzung des Spurlenkers 8 (bei einer Anordnung des Aktuators 11 in einem geteilt ausgebildeten Spurlenker 8 gemäß **Fig. 4****)** bzw. im Falle einer Fußpunktverstellung des Spurlenkers (wie in **Fig.5** dargestellt) eine Verlagerung des aufbauseitigen Spurlenker-Anlenkpunktes zur Fahrzeugmitte hin zu einer Verstellung in negative Vorspurrichtung führt. Eine Verlängerung des Spurlenkers 8 (bei einer Ausführung nach **Fig.4**) bzw. im Falle einer Lenkerfußpunktverstellung (gemäß **Fig.5**) eine Verlagerung des aufbauseitigen Spurlenker-Anlenkpunktes zur Fahrzeugaußenseite hin führt dagegen zur eine Verstellung des Rades 1 in positive Vorspurrichtung.

Durch die Kombination zweier aktiver Lenker je Rad 1, deren radseitige Anlenkpunkte mittels der genannten Aktuatoren 11, 13 verlagerbar sind, d.h. hier des aktiven Querlenkers 7 und des aktiven Spurlenkers 8, ist es möglich, einen gewählten aktiv gestellten Sturzwinkel mit einem aktiv gestellten Vorspurwinkel in den Grenzen der zur Verfügung stehenden Verstellbereiche frei zu kombinieren. Auf diese Weise ist es beispielsweise möglich, beide Räder 1 der Hinterachse um den gleichen Spurwinkel gemäß eines gleichsinnigen Lenkeinschlages zu verstellen, während beide Räder 1 einen unterschiedlichen Sturzwinkel aufgeprägt bekommen. Es ist somit möglich, das kurvenäußere Rad 1 in fahrdynamisch vorteilhafter Ausprägung in negativen Sturz aktiv zu verstellen, während das kurveninnere Rad 1 keine Sturzverstellung erfährt.

Durch die hier umgesetzte Anordnung der Spurlenker 8 wird in der beschriebenen Ausführungsform des Fahrwerks erreicht, dass bereits die Verstellung der aktiven Querlenker 7 zu einer fahrdynamisch sinnvollen Kombination aus Spurwinkel und Sturzwinkel führt. Wenn diese (sinnvolle) Kombination die fahrdynamischen Anforderungen an die Radstellung der Hinterräder erfüllt, kann eine Verstellung der aktiven Spurlenker 8 ausbleiben. Soll der Spurwinkel eines oder beider Räder 1 der Achse verringert werden, so genügen relativ geringe Verstellwege der den aktiven Spurlenken 8 zugeordneten Aktuatoren 13.

Sollte es - in Abweichung zu den figürlich dargestellten Ausführungsbeispielen - bspw. aus Gründen der Integration der Fzg.-Achse in das Fahrzeugpackage erforderlich sein, die Spurlenker in Fahrtrichtung betrachtet vor der Achsmitte anzuordnen, so dienen die Spurlenker dem Spurausgleich der durch die aktive Querlenkerverstellung hervorgerufenen unvorteilhaften Änderungen des Vorspurwinkels, auch als Spurfehler bezeichnet.

Zurückkommend auf die hier vorgestellten Ausführungsbeispiele können In den bislang beschriebenen Ausführungsvarianten mit insgesamt vier Aktuatoren 11, 13 je Achse entweder alle Aktuatoren in geteilten und somit längenveränderlichen Lenkern 7, 8 gemäß der Darstellung in **Fig. 4** oder sämtliche in Form einer Lenker-Fußpunktverstellung gemäß der Darstellung in **Fig. 5** angeordnet sein. Darüber hinaus kann ein erfindungsgemäßes Fahrwerksystem auch als eine beliebige Kombination aus zwei aktiven längenveränderlichen Lenkern und zwei Lenkerfußpunktverstellungen ausgeführt werden, also mit zwei Fußpunktverstellungen je Achse für die Spurlenker 8 und zwei längenveränderlichen aktiven Querlenkern 7.

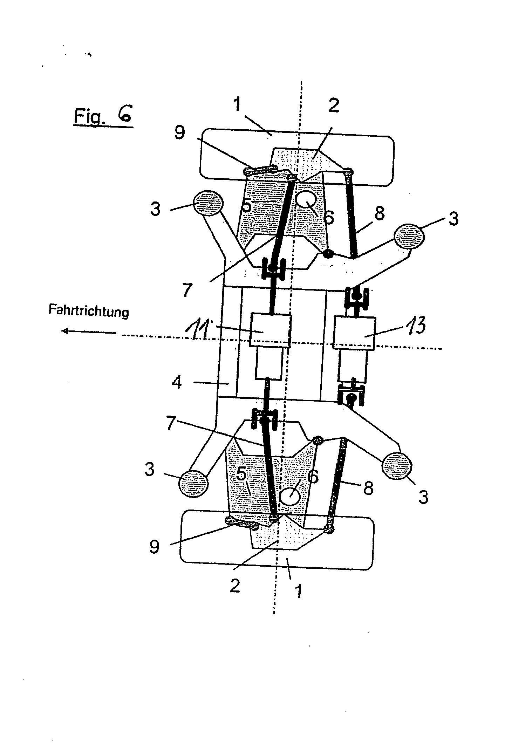

In einer weiteren Ausführungsform der vorliegenden Erfindung wird ein gemeinsamer Aktuator 11 für die Verstellung der aufbauseitigen Lenkerfußpunkte der beiden aktiven Querlenker 7 je Achse, d.h. ein gemeinsamer Aktuator 11, auch Zentral-Aktuator genannt, für die beiden Räder 1 der Achse vorgeschlagen, so wie dies in **Fig. 6** dargestellt ist. Die aufbauseitigen bzw. dem Hinterachsträger 4 zugewandten Fußpunkte der beiden aktiven Querlenker 7 sind über Koppelstangen 12 mit dem einzigen Zentral-Aktuator 11 verbunden. Mit einer durch den Aktuator 11 hervorgerufenen Bewegung der Koppelstangen 12, die im übrigen auch miteinander verbunden sein können, so dass eine einzige Koppelstange 12, an der der Aktuator 11 angreift, die Fußpunkte der beiden aktiven Querlenker 7 miteinander verbindet, wird eines der beiden Räder 1 in positiven Sturz und Nachspur verstellt, während das andere Rad 1 in negativen Sturz und Vorspur geht. Durch geeignete Anordnung der radführenden Lenker kann erreicht werden, dass mit einer Verstellung des gemeinsamen Zentral-Aktuators 11 beide Räder 1 der Hinterachse gemäß einem Paralleleinschlag verstellt werden.

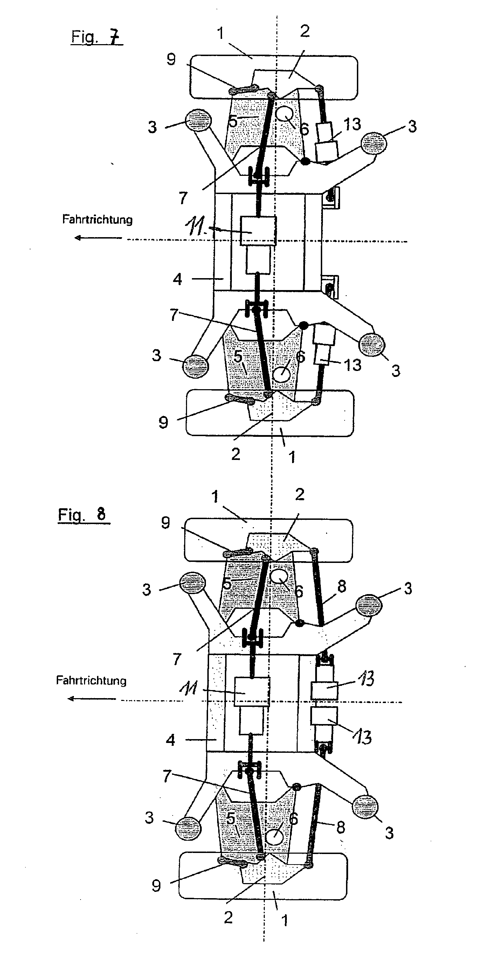

Die gemeinsame Verstellung der Fußpunkte der beiden aktiven Querlenker 7 der Fzg.-Achse ist hier mit einer gemeinsamen Verstellung der aufbauseitigen Anlenkpunkte (= Fußpunkte) der (aktiven) Spurlenker 8 der Achse (und somit mit einer gesamthaften Verlagerung der Spurlenker 8 über einen in der Fzg.-Mitte angeordneten Zentral-Aktuator 13 kombiniert. Alternativ kann die gemeinsame Verstellung der Fußpunkte der aktiven Querlenker 7 mit längenveränderlichen aktiven Spurlenkern 8 kombiniert sein, so wie dies in **Fig. 7** dargestellt ist. In einer weiteren Ausführungsform (vgl. **Fig. 8**) ist eine gemeinsame Verstellung der Fußpunkte der beiden aktiven Querlenker 7 über einen einzigen (Zentral-)Aktuator 11 mit einer radindividuellen Verstellung der aufbauseitigen Anlenkpunkte der aktiven Spurlenker 8 über eine Fußpunktverstellung gekoppelt.

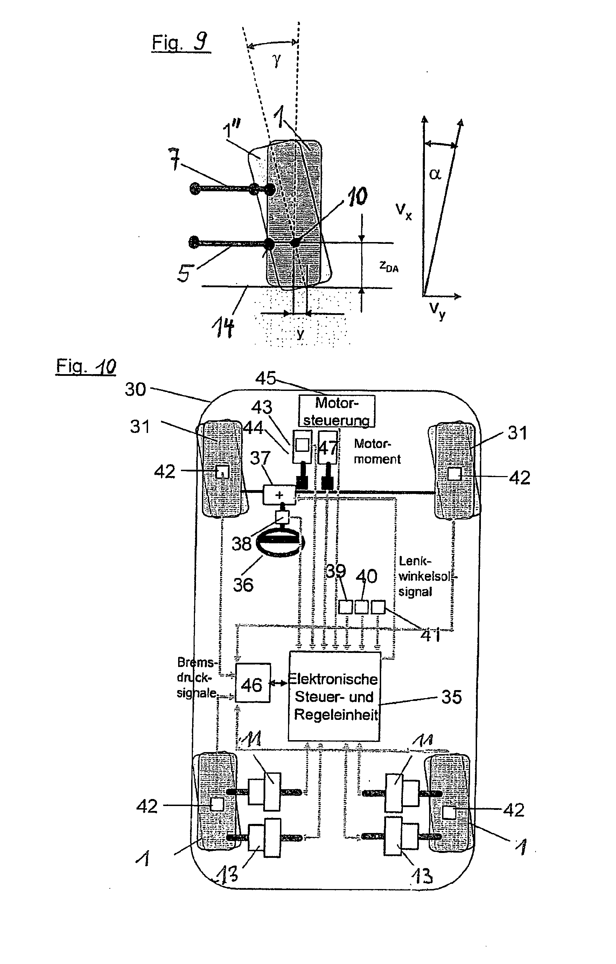

Von besonderem Vorteil an einem erfindungsgemäßen Fahrwerk ist, dass bzw. wenn bei einer Betätigung der aktiven Querlenker 7 die für die daraus resultierende Bewegung des Rades 1 bzw. des Radträgers 2 maßgebliche Drehachse 10 (bzw. Schwenkachse 10) um ein Maß z_{DA} oberhalb der Fahrbahn 14 liegt, so wie dies in **Fig. 9** in einer Ansicht von hinten dargestellt ist. Dies begrenzt den Bauraumbedarf des nach innen in negativen Sturz schwenkenden Rades 1 (welches im geneigten Zustand unter der Bezugsziffer 1" gezeigt ist) im Gegensatz zu Systemen, die über hohen technischen Aufwand einen Drehpunkt im Bereich der Fahrbahnoberfläche realisieren. Durch die Verstellung um eine oberhalb der Fahrbahn 14 liegende Drehachse 10 wird bei Verstellung des Rades 1 eine seitliche Bewegung v_{y} des Radaufstandspunktes um die Strecke y eingeleitet. Diese Bewegung führt bei mit der Abrollgeschwindigkeit vₓ rollendem Rad 1 zu einem Schräglaufwinkel α des Rades für den Zeitraum der Verstellung, siehe hierzu das Vektordiagramm in der rechte Bildhälfte von **Fig. 9****.** Dieser kurzzeitige Schräglauf des Rades 1 ruft eine Seitenkraft hervor, die den Seitenkraftaufbau des Rades 1 bei Verstellung in negativen Sturz unterstützt.

**Fig.10** zeigt eine schematische Darstellung eines Kraftfahrzeuges 30 mit einem erfindungsgemäßem Fahrwerksystem. Das mechatronische Fahrwerkssystem zur aktiven Ansteuerung von Vorspur- und Sturzwinkel an den Hinterrädern 1, aufweisend zumindest die Aktuatoren 11 (für hier nicht dargestellte aktive Querlenker 7), vorzugsweise zusätzlich die Aktuatoren 13 (für hier ebenfalls nicht dargestellte aktive Spurlenker 8) wird von einer elektronischen Steuereinheit 35 betätigt. Die Vorderräder 31 werden von einer Lenkeinrichtung 36 gelenkt. In einer ersten Ausprägung der Ansteuerung erfolgt die Betätigung der Aktuatoren 11, 13 nach einem Vorsteuergesetz, welches die Fahrgeschwindigkeit des Fahrzeugs und den vom Fahrer vorgegebenen Lenkwinkel bei der Bildung der Stellwerte berücksichtigt. Der vom Fahrer vorgegebene Lenkwinkel wird von einem Lenkwinkelsensor 38 gemessen. In einer weiteren Ausprägung des Vorsteuergesetzes wird zusätzlich das Sensorsignal eines Querbeschleunigungssensors 39 zur Bildung der Stellwerte für die Aktuatoren 11, 13 verwendet. Zusätzlich wird vorgeschlagen, aus den Signalen des Querbeschleunigungssensors 39 und eines Gierrratensensors 40 sowie unter Berücksichtigung der Signale von Fahrgeschwindigkeit und Fahrer-Lenkwinkel geeignete Regelgesetze zu bilden, um die Aktuatoren 11, 13 der Hinterachse im Falle von Untersteuern oder Übersteuern des Fahrzeugs geeignet anzusteuern.

Als eine weitere Ausprägung der Ansteuerung können längsdynamische Vorsteuergrößen zur Ansteuerung der Aktuatoren 11, 13 und somit der Radstellung der Hinter-Räder 1 verwendet werden. So ist es zum einen möglich, eine Bremsverzögerung des Fahrzeugs bei der Verstellung des oder der aktiven Lenker (Querlenker 7 und/oder Spurlenker 8) zu berücksichtigen. Hierbei kann der Bremsdruck des Hauptbremszylinders 44 mittels eines Drucksensors 43 oder die Bremsdrücke der Radbremszylinder 42 verwendet werden, um den Verzögerungszustand des Fahrzeuges zu ermitteln. Als weitere Möglichkeit kann das Signal eines Längsbeschleunigungssensors 41 ausgewertet werden. Über Kennlinien kann der Spurwinkel und der Sturzwinkel der Hinter-Räder 1 in Abhängigkeit von der Fzg.-Längsverzögerung vorgesteuert eingestellt werden. Hierdurch wird der Übersteuertendenz eines Fahrzeuges bei Teilbremsungen während Kurvenfahrt entgegengewirkt, indem die Räder 1 in negativen Sturz zur Fahrbahn verstellt werden. Diese Übersteuertendenz entsteht dadurch, dass durch die im Fahrzeug-Schwerpunkt angreifende Verzögerung die Achslast der Vorderachse ansteigt, während die Achslast der Hinterachse im gleichen Maße vermindert wird. Als Folge verringert sich der Achsschräglaufwinkel an der Vorderachse, während der Achsschräglaufwinkel an der Hinterachse ansteigt. Bei starken Bremsungen bis hin zu Vollbremsungen während Kurvenfahrt ändert sich dieses Verhalten zu Untersteuern, da durch die große Längskraftbeanspruchung der Vorderachse die Schräglaufsteifigkeiten der Reifen abnehmen und der Schräglaufwinkelbedarf an der Vorderachse ansteigt. In einer derartigen Situation werden die Hinter-Räder 1 in Nachspur und positiven Sturz zur Fahrbahn verstellt und dadurch die Untersteuertendenz gezielt abgebaut.

Durch die Berücksichtigung der Fahrpedalstellung des Fahrpedals 47, mit der Fahrer seinen Lastwunsch an das Antriebsaggregat des Fahrzeugs abgibt und/oder des Antriebsmoments des Fahrzeug.-Antriebsaggregats aus der sog. Motorsteuerung 45 kann zudem vorgesteuert die so genannte Lastwechselreaktion abgemildert werden. Ähnlich wie im geschilderten Fall der Teilbremsung bei Kurvenfahrt kommt es durch die Achslastverlagerung beim schlagartigen Ausbleiben der Längsbeschleunigung zu einer Vergrößerung des Achsschräglaufwinkels an der Hinterachse. Diese Fahrzeugreaktion wird noch verstärkt durch das Auftreten des sog. Motorschleppmomentes an den Hinterrädern eines standard-, d.h. heckgetriebenen Fahrzeuges. Durch eine gleichzeitige Verstellung in negativen Sturz kann diese Übersteuerreaktion vermindert werden. Gleichzeitig können durch die Verwendung der Sensorsignale von Fahrpedal 47 und Antriebsmoment bei starker Längsdynamikanforderung bei Kurvenfahrt die Hinter-Räder 1 in eine günstige Sturzstellung gebracht werden und somit Übersteuerreaktionen verhindert werden.

Die beschriebenen Vorsteuer- und Regeleingriffe beeinflussen das Seitenführungspotential der Fzg.-Hinter-Räder 1 und haben dadurch einen direkten Einfluss auf den querdynamischen Zustand des Fahrzeugs. Hierdurch lassen sich störende und die Fahrgeschwindigkeit reduzierende Eingriffe eines (üblichen) Bremsregelsystems 46 (mit dem dem Fachmann bekannten ESP oder dgl.) verringern bzw. hinauszögern. Erst wenn auch die Stabilisierung über Spurwinkel- und Sturzwinkel-Eingriffe an den Hinter-Rädern 1 (ggf. auch den Vorderrädern 31) nicht ausreicht, um die Lenkbarkeit oder Stabilität des Fahrzeuges wiederherzustellen, kann das Bremsregelsystem 46 als zweite Ebene eingreifen. Für den Fahrer vollzieht sich die Stabilisierung des Fahrzeuges dadurch deutlich harmonischer und er ist in der Lage, eine höhere Dynamik des Fahrzeuges zu nutzen. In einer vorteilhaften Ausprägung sind die Funktionslogik des erfindungsgemäßen Fahrdynamiksystems und der Fahrdynamikregler des Bremsregelsystems derart miteinander vernetzt, dass die Eingriffschwellen des Bremsregelsystems abhängig vom Zustand der Vorspur- und Sturzwinkelbetätigung an der Hinterachse angepasst werden.

Es kann das beschriebene aktive Fahrwerksystem mit einer Überlagerungslenkung 37 an der Vorderachse des Fahrzeugs verbunden sein. Hierdurch ist es bspw. möglich, die stationären Lenkeigenschaften des Fahrzeuges für den Fahrer bei Eingriffen in die Radstellung der Hinterräder konstant zu halten. Hierauf wurde vor der Figurenbeschreibung bereits näher eingegangen.

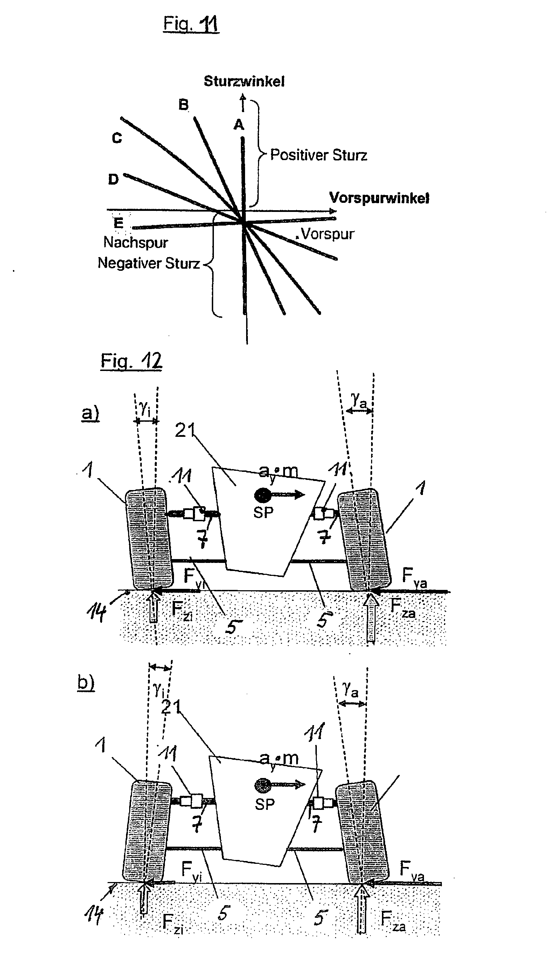

Indem das Fahrzeug an der Hinterachse über vier Aktuatoren 11, 13 bzw. genauer sowohl über aktive Querlenker 7 als auch über aktive Sturzlenker 8, die jeweils individuell einstellbar sind, verfügt, sind verschiedene Ausprägungen der Verstelllogik möglich, die in Fig. **11** exemplarisch aufgezeigt werden. Zum einen ist es mit einem solchen Fahrwerksystem möglich, am kurveninneren und kurvenäußeren Hinter-Rad 1 eine Sturzanpassung durchzuführen, ohne die Spurwinkel der Räder 1 zu verstellen. In diesem Fall werden die Spurlenkerverstellungen verwendet, um den durch die Querlenkerverstellungen hervorgerufenen Spurwinkel auszugleichen. Diese Verstellmöglichkeit ist unter dem Buchstaben "A" dargestellt. Eine weitere Möglichkeit ("B") der Ansteuerung besteht darin, den Verstellbereich der Spurlenkerverstellung zu vermindern. In diesem Fall werden die Räder in einer fahrdynamisch sinnvollen Kopplung von Spur und Sturz verstellt, wobei der Anteil des Spurwinkels gegenüber der kinematischen Kopplung bei reiner Querlenkerverstellung (Buchstabe "C") vermindert ist. Eine darüber hinaus gehende Möglichkeit ("D") der Ansteuerung besteht darin, den Verstellbereich der Querlenkerverstellung zu vermindern. In diesem Fall werden die Räder in einer fahrdynamisch sinnvollen Kopplung von Spur und Sturz verstellt, wobei der Anteil des Sturzwinkels gegenüber der kinematischen Kopplung bei reiner Querlenkerverstellung vermindert ist, wenn der Spurwinkel zusätzlich durch die Spurlenkerverstellung in fahrdynamisch sinnvoller Weise verstellt wird. Lediglich der Vollständigkeit halber zusätzlich dargestellt ist unter dem Buchstaben "E" eine Spurlenkerverstellung mit geringer Auswirkung auf den Sturzwinkel der Räder.

Eine schematische Darstellung der Sturzverstellung an einer Achse eines Kraftfahrzeuges zeigen in Anlehnung an die Schilderung des Standes der Technik gemäß Fig.1a, 1b die **Figuren 12a, 12b****.** Hierbei sind die Hinter-Räder 1 über untere Lenker 5 und obere aktive Querlenker 7 am Aufbau 21 angelenkt. Im Aufbauschwerpunkt SP greift die Zentripetalkraft, bestehend aus dem Produkt aus Fahrzeugmasse m und Querbeschleunigung a_{y} an. **Fig. 12a** zeigt ein aktives Fahrwerksystem mit Sturzverstellung an beiden Rädern 1 beim Befahren einer Linkskurve. Eine Sturzoptimierung wirkt sich insbesondere bei hohen Radlasten positiv auf die maximal vom Reifen übertragbaren Kräfte aus. Bei der Ansteuerung des aktiven Fahrwerks wird erfindungsgemäß eine Sturzoptimierung nur am jeweils kurvenäußeren Rad vorgenommen, so wie dies (abermals für das Befahren einer Linkskurve) in **Fig. 12b** dargestellt ist. Wird mit dem Sturzwinkel γ zusätzlich ein Vorspurwinkel verstellt, wird am kurveninneren Rad ein betragsmäßig gleicher Vorspurwinkel durch die Spurlenker-Verstelleinrichtung des kurveninneren Rades eingestellt, so dass beide Hinterräder gemäß einem Paralleleinschlag eingeschlagen sind. Die Verstellwege der Verstelleinrichtungen bzw. Aktuatoren 13 für die aktiven Spurlenker 8 sind in diesem Fall für die beiden Räder 1 der Achse im Allgemeinen betragsmäßig nicht gleich. Wird der Spurfehler am kurvenäußeren Rad dagegen vollständig ausgeglichen, wird das kurveninnere Rad nicht verstellt.

Die weiterhin beigefügten **Figuren 13****,** **14****,** auf die im Zusammenhang mit der Erläuterung von **Fig.2** bereits eingegangen wurde, zeigen Ansichten einer Fzg.-Hinterachse, an der ein erfindungsgemäßes aktives Fahrwerksystem realisierbar ist, und zwar in Ansicht von hinten (**Fig.13**, nur hälftig mit linkem Rad) bzw. in Seitenansicht (**Fig.14****)**. Die einzelnen Bauelemente der Achse wurden bereits in Verbindung mit **Fig.2** beschrieben. Um den Vorspurwinkel und den Sturzwinkel des Hinter-Rades **1** in fahrdynamisch sinnvoller Kopplung zu verstellen, so dass ein negativer Vorspurwinkel zusammen mit einem positiven Sturzwinkel bzw. ein positiver Vorspurwinkel zusammen mit einem negativem Sturzwinkel auftreten, ist der Spurlenker 8 in Draufsicht hinter der Achsmitte angeordnet. Dadurch und durch die Lage des Anlenkpunktes von Radträger 2 und Schwinge 5 entsteht bezüglich einer Verlagerung des aktiven Querlenkers 7 eine Drehachse 10 des Radträgers' 2, die nach hinten (entgegen Fahrtrichtung) ansteigt und durch die Anlenkpunkte des Radträgers 2 am Spurlenker 8 und der Schwinge 5 festgelegt ist. Diese Drehachse 10 bei Verlagerung des radseitigen Anlenkpunktes des Querlenkers 7 ist in Fig. 19 schematisch dargestellt. Aufgrund von Einflüssen des Integrallenkers 9 und der Elastokinematik kann die reale Drehachse von dieser schematischen Drehachse 10 abweichen, dennoch verdeutlicht die schematische Drehachse 10 das prinzipielle Verhalten. Um über den aktiven Querlenker 7 den Sturzwinkel und den Spurwinkel des Rades 1 betragsmäßig in mindestens gleichem Maße zu verstellen, oder den Sturzwinkel betragsmäßig in größerem Ausmaß gegenüber dem Spurwinkel zu verändern, ist es erforderlich, dass die Drehachse 10 mit einem Winkel von ca. 45° oder weniger zu Fahrbahn 14 geneigt verläuft.

Bei einer Verlagerung des radseitigen Anlenkpunktes des (aktiven) Spurlenkers 8 hingegen wird die entsprechende Drehachse 15 der Radträgerbewegung durch die Anlenkpunkte des Radträgers 2 am aktiven Querlenker 7 und an der Schwinge 5 gebildet. Diese Drehachse 15 verläuft annähernd senkrecht, sodass hauptsächlich der Parameter "Spurwinkel" beeinflusst wird. Durch die leichte Neigung der Drehachse 15 nach vorne (vgl. **Fig.14**) entsteht sogar ein geringfügiger Sturzanteil, der bei positivem Spurwinkel in positive Richtung und bei negativem Spurwinkel in negative Richtung zeigt, und somit einer fahrdynamisch sinnvollen Kopplung sogar geringfügig entgegenwirkt. In der vorliegenden Ausführungsform der Achse liegt das Verhältnis von Veränderung des Spurwinkels zur Veränderung des Sturzwinkels bei Verlagerung des radträgerseitigen Anlenkpunktes des Spurlenkers jedoch nur bei ca. 13:1 und verursacht daher mit einer Spurwinkel-Veränderung nur eine sehr geringe Veränderung des Sturzwinkels.

## Patentansprüche

1. Betriebsverfahren für ein aktives Fahrwerksystem eines zweispurigen Fahrzeugs an dessen Hinterachse, mit einer Möglichkeit zur Verstellung von Rad-Sturzwinkel und Rad-Spurwinkel des durch Lenker (5, 7, 8) geführten Rades (1) im Fahrbetrieb mittels eines ersten für diese Verstellung eine Verlagerung des radseitigen Anlenkpunktes eines aktiven Querlenkers (7) bewirkenden Aktuators (11),. wobei der aktive Querlenker (7) sowie die weiteren radführenden Lenker (5, 8) derart angeordnet sind, dass mit einer Verlagerung des radseitigen Anlenkpunktes des aktiven Querlenkers (7) in Richtung zunehmend positiven Sturzes das Rad (1) zunehmend in Nachspur geht, während mit zunehmend negativem Sturz das Rad (1) zunehmend in Vorspur geht, und wobei sich der Sturzwinkel um einen Betrag zumindest in der gleichen Größenordnung der an eine Sturzwinkel-Veränderung kinematisch gekoppelten Spurwinkel-Veränderung verändert, während sich der Spurwinkel um einen Betrag zumindest in der Größenordnung der hälftigen Sturzwinkel-Veränderung verändert, und wobei der Aktuator (11) geeignet ist, die möglichen Stelleingriffe in einem fahrdynamisch relevanten Frequenzbereich in der Größenordnung von 1 Hertz oder höher auszuführen,
sowie mit einem weiteren Aktuator (13) zur Verlagerung des radseitigen Anlenkpunktes eines Spurlenkers (8), der im wesentlichen nur den Spurwinkel des Rades (1) bestimmend angeordnet ist,
**dadurch gekennzeichnet, dass** bei Kurvenfahrt des Fahrzeugs der Aktuator (13) zur Verlagerung des radseitigen Spurlenker-Anlenkpunktes derart angesteuert wird, dass bei gleichzeitiger Ansteuerung des anderen, den Spurwinkel und Sturzwinkel mittels des aktiven Querlenkers (7) verstellenden Aktuators (11) am zugehörigen Rad (1) der Spurwinkel im wesentlichen unverändert bleibt, und dass bei Kurvenfahrt des Fahrzeugs nur am kurvenäußeren Hinter-Rad der Sturzwinkel verstellt wird, während am kurveninneren Hinter-Rad ausschließlich eine Spurverstellung vorgenommen wird, derart, dass die beiden Räder der Hinterachse zumindest annähernd parallel eingeschlagen sind.

2. Betriebsverfahren nach Anspruch 1, **dadurch gekennzeichnet, dass** die Stellsignale für den oder die Aktuator(en) über eine Vorsteuerung unter Berücksichtigung des Lenkwinkels der lenkbaren Fzg.-Räder und der Fahrgeschwindigkeit des Fahrzeugs gebildet werden.

3. Betriebsverfahren nach einem der Ansprüche 1 - 2, **dadurch gekennzeichnet, dass** die Stellsignale für den oder die Aktuator(en) über eine Vorsteuerung unter Berücksichtigung der Querbeschleunigung des Fahrzeugs gebildet werden.

4. Betriebsverfahren nach einem der Ansprüche 1 - 3, **dadurch gekennzeichnet, dass** die Stellsignale für den oder die Aktuator(en) durch Regelfunktionen gebildet werden, die die Gierrate und die Querbeschleunigung des Fahrzeugs berücksichtigen und das Fahrzeug bei Übersteuern stabilisieren und im Falle von Untersteuern die Lenkbarkeit des Fahrzeuges wieder herstellen.

5. Betriebsverfahren nach einem der Ansprüche 1 - 4, **dadurch gekennzeichnet, dass** zur Bildung der Stellsignale für den oder die Aktuator(en) (zusätzlich) die Bremsdruck-Werte aus einem Hauptbremszylinder und/oder von Radbremszylindern für eine vorgesteuerte Verstellung verwendet werden.

6. Betriebsverfahren nach einem der Ansprüche 1 - 5, **dadurch gekennzeichnet, dass** zur Bildung der Stellsignale für den oder die Aktuator(en) (zusätzlich) das vom Fzg.-Antriebsaggregat abgegebene Moment und/oder der an das Antriebsaggregat übermittelte Lastwunsch des Fahrers berücksichtigt wird.

7. Betriebsverfahren nach einem der vorangegangenen Ansprüche, wobei das Fahrzeug an der Vorderachse mit einem sog. aktiven Lenksystem, insbesondere mit einer elektromechanischen Überlagerungslenkung, ausgestattet ist, mit Hilfe dessen/derer ein von der Vorgabe des Fahrers unabhängiger Lenkwinkel an den lenkbaren Vorder-Rädern einstellbar ist, **dadurch gekennzeichnet, dass** das aktive Lenksystem bei der Ermittlung eines zu stellenden Lenkwinkels die gestellten Positionen an den Lenkern der Hinterachse, deren radseitiger Anlenkpunkt verlagerbar ist, berücksichtigt.

## Claims

1. An operating method for an active chassis system of a two-track vehicle at its rear axle, with a possibility for adjusting the wheel camber angle and wheel toe angle of the wheel (1) guided by control arms (5, 7, 8) during driving operation by means of a first actuator (11) bringing about a displacement of the wheel-side articulation point of an active transverse control arm (7) for this adjustment, wherein the active transverse control arm (7) and the further wheelguiding control arms (5, 8) are arranged in such a way that with a displacement of the wheel-side articulation point of the active transverse control arm (7) in the direction of an increasingly positive camber, the wheel (1) increasingly goes into toe-out, while with an increasingly negative camber, the wheel (1) increasingly goes into toe-in, and wherein the camber angle changes by an amount at least in the same order of magnitude of the toe angle change kinematically coupled to a camber angle change, while the toe angle changes by an amount at least in the order of magnitude of half the camber angle change, and wherein the actuator (11) is suitable to carry out the possible control actions in a frequency range that is relevant in terms of driving dynamics in the order of magnitude of 1 hertz or higher, and with a further actuator (13) for displacing the wheel-side articulation point of a track control arm (8), which is arranged substantially only determining the toe angle of the wheel (1), **characterised in that** when the vehicle is cornering, the actuator (13) is activated to displace the wheel-side track control arm articulation point in such a way that upon simultaneous activation of the other actuator (11) adjusting the toe angle and camber angle by means of the active transverse control arm (7) at the associated wheel (1), the toe angle substantially remains unchanged and **in that** when the vehicle is cornering, the camber angle is only adjusted at the rear wheel on the outside of the corner, while a toe adjustment is exclusively carried out on the rear wheel on the inside of the corner in such a way that the two wheels of the rear axle are steered at least approximately in parallel.

2. An operating method according to claim 1, **characterised in that** the control signals for the actuator(s) are formed by means of a servo control taking into account the steering angle of the steerable vehicle wheels and the travelling speed of the vehicle.

3. An operating method according to either of claims 1 or 2, **characterised in that** the control signals for the actuator(s) are formed by means of a servo control taking into account the transverse acceleration of the vehicle.

4. An operating method according to any one of claims 1 to 3, **characterised in that** the control signals for the actuator(s) are formed by regulating functions, which take into account the yaw rate and the transverse acceleration of the vehicle and stabilise the vehicle in the event of oversteering and, in the event of understeering, restore the steerability of the vehicle.

5. An operating method according to any one of claims 1 to 4, **characterised in that** to form the control signals for the actuator(s), the braking pressure values from a main brake cylinder and/or of wheel brake cylinders are (additionally) used for a servo-controlled adjustment

6. An operating method according to any one of claims 1 to 5, **characterised in that** to form the control signals for the actuator(s), the torque delivered by the vehicle drive unit and/or the load request of the driver transmitted to the drive unit is (additionally) taken into account.

7. An operating method according to any one of the preceding claims, wherein the vehicle is equipped at the front axle with a so-called active steering system, more especially with an electromechanical superimposition steering system, with the aid of which a steering angle independent of the driver's input can be adjusted at the steerable front wheels, **characterised in that** the active steering system, during the determination of a steering angle to be set, takes into account the set positions at the control arms of the rear axle, the wheel-side articulation point of which is displaceable.

## Revendications

1. Procédé de gestion d'un système actif de châssis d'un véhicule à deux voies dont l'essieu arrière comporte un actionneur (11) avec la possibilité de régler l'angle de carrossage et l'angle de pincement de la roue (1) guidée par des bras (5, 7, 8) en mode de roulage à l'aide d'un premier actionneur (11) pour le réglage du déplacement du point d'articulation côté roue d'un bras transversal (7), actif,
- le bras transversal actif (7) et les autres bras de guidage de roue (5, 8) étant installés pour qu'avec le déplacement du point d'articulation côté roue du bras transversal actif (7) dans le sens d'un carrossage positif croissant, la roue (1) passe de plus en plus en ouverture alors qu'avec un carrossage négatif croissant, la roue (1) passe de façon croissante en pincement, et
- l'angle de carrossage change d'une valeur qui est au moins dans l'ordre de grandeur de la variation d'angle de voie couplée cinématiquement à une variation d'angle de carrossage, alors que l'angle de pincement varie au moins de l'amplitude d'au moins l'ordre de grandeur de la demi-variation de l'angle de carrossage, et
- l'actionneur (11) effectue les interventions de réglage possibles dans une plage de fréquence concernée par la dynamique de roulage qui est de l'ordre de grandeur de 1 Hz ou plus,
- ainsi qu'un autre actionneur (13) pour déplacer le point d'articulation côté roue d'un bras de guidage (8) qui est installé pour l'essentiel de façon à ne déterminer que l'angle de voie de la roue (1),
**caractérisé en ce que**
au passage du véhicule en courbe, l'actionneur (13) pour déplacer le point d'articulation du bras de guidage côté roue est commandé pour qu'avec une commande simultanée de l'autre actionneur (11) qui déplace l'angle de voie et l'angle de carrossage par le bras transversal (7), actif, laisse sur la roue (1) correspondante, l'angle de voie pour l'essentiel inchangé et **en ce que** dans un trajet en courbe du véhicule, on ne règle que l'angle de carrossage de la roue arrière côté extérieur de la courbe alors que pour la roue arrière intérieure à la courbe, on effectue exclusivement un réglage de voie de façon que les deux roues de l'essieu arrière soient braquées au moins sensiblement parallèlement.

2. Procédé de gestion selon la revendication 1,
**caractérisé en ce que**
les signaux de réglage pour le ou les actionneurs sont formés par la précommande en tenant compte de l'angle de braquage des roues directrices et de la vitesse de circulation du véhicule.

3. Procédé de gestion selon l'une des revendications 1 et 2,
**caractérisé en ce que**
les signaux de position sont formés pour le ou les actionneurs en fonction de la commande préalable tenant compte de l'accélération transversale du véhicule.

4. Procédé de gestion selon l'une des revendications 1 à 3,
**caractérisé en ce que**
les signaux de réglage pour le ou les actionneurs sont formés par des fonction de régulation tenant compte de l'accélération de lacet et de l'accélération transversale du véhicule et qui stabilisent le véhicule en survirage et rétablissent de nouveau la direction du véhicule en cas de sous-virage.

5. Procédé de gestion selon l'une des revendications 1 à 4,
**caractérisé en ce que**
pour former les signaux de réglage du ou des actionneurs on utilise (en plus ) les valeurs des pressions de frein du maître-cylindre et/ou des cylindres de frein de roue pour effectuer un réglage précommandé.

6. Procédé de gestion selon l'une des revendications 1 à 5,
**caractérisé en ce que**
pour former les signaux de réglage du ou des actionneurs, on tient compte (en plus) du couple fourni par l'unité d'entraînement du véhicule et/ou de la demande de charge du conducteur transmise à l'unité d'entraînement.

7. Procédé de gestion selon l'une des revendications précédentes,
selon lequel
l'essieu avant du véhicule est équipé d'un système de direction actif notamment d'une direction principale électromécanique pour régler un angle de braquage des roues avant directrices indépendant de la consigne du conducteur,
procédé **caractérisé en ce que**
le système de direction actif lorsqu'il détermine l'angle à régler, tient compte des positions réglées des bras de l'essieu arrière dont le point d'articulation côté roue est déplacé.
